# EUROPEAN PATENT SPECIFICATION

(11) **EP 0 321 263 B1**
(45) Date of publication and mention of the grant of the patent: **02.03.1994**
(21) Application number: 88311910.9
(22) Date of filing: 16.12.1988
(51) Int. Cl.: H02G 15/10, H02G 15/103

(54) **Power cable jointing**
Verbindung von Energiekabeln
Jonction de câbles d'énergie

(30) Priority: 17.12.1987 GB 8729454
(43) Date of publication of application: 21.06.1989
(73) Proprietor: ASSOCIATED ELECTRICAL INDUSTRIES LIMITED, London W1A 1EH (GB)
(72) Inventor: Gilbert, Peter Ronald, Belvedere Kent DA17 6DN (GB)
(74) Representative: Pope, Michael Bertram Wingate

(56) References cited:
- FR-A- 2 498 022
- GB-A- 2 022 331
- US-A- 3 571 783
- US-A- 4 164 620

## Description

This invention relates to a method of forming a joint between electric power cables, and to a joint formed between such cables, and is intended particularly for medium voltage power cables, that is to say cables designed for use with an operating voltage above 600/1000 V but not exceeding 21000/36000 V.

Such cables need, of course, be adequately insulated, and this applies also to joints that are formed between two cables.

One method of jointing in common use makes use of high grade insulating material, that is to say one with a high electrical breakdown strength, for both electrical insulation and for protective encapsulation, but this tends to be expensive.

A less expensive method uses high grade material to provide electrical insulation and a lower grade material to encapsulate for protection.

In both cases, however, it is necessary for the high grade material to be in intimate contact with the original cable insulation. If this requirement is not observed, for example if air-filled voids are present between the original cable insulation and the applied insulating material, then electrical activity at the interfaces can cause deterioration of the applied insulating material, or the original cable insulation, leading to premature joint failure.

According to the present invention, a method of forming a joint between insulated conductors of two power cables, comprises the steps of surrounding the ends of the interconnected conductors with a sleeve of solid electrically insulating material incorporating along part of its internal surface intermediate its ends an insert of a material which is substantially more electrically conductive than the sleeve, so that the insert is in electrical contact with the interconnected conductors and the ends of the sleeve project over the cable insulation with an annular gap therebetween, introducing to the joint in a fluid state a hardenable, electrically-insulating material which is substantially less electrically conductive when solid than the insert and which is sufficiently fluid to allow it to penetrate and fill the annular gap between the projecting ends of the sleeve and the cable insulation, and allowing the material to harden to encapsulate the joint.

According to another aspect, the invention provides a joint formed between insulated conductors of two power cables, comprising : means interconnecting the conductors; a sleeve surrounding the interconnected conductors and having ends projecting over the cable insulation to define at each end an annular gap therebetween; an insert incorporated along part of the internal surface of the sleeve intermediate its ends and in electrical contact with the interconnected conductors; and characterised by a hardened material encapsulating the joint and filling the said annular gaps, having been introduced therein in a fluid state; the sleeve and the encapsulating material being electrically insulating and substantially less electrically conductive than the insert.

With such a joint the sleeve can be formed of a high grade solid insulating material with appropriate shape and dimensions to provide adequate electrical insulation, and the encapsulating material need be only of a lower grade insulating material, preferably a resin. The insert is at the same electric potential as the conductors, so that the encapsulating material lying between the interconnected conductors and the sleeve has no potential difference across it, and therefore requires no electric strength. This is important because voids or bubbles frequently occur in heavily-filled, low grade resins, particularly in thin resin sections; such voids would be electrically unstressed.

The combination of the shaped sleeve and an encapsulating material which is sufficiently fluid during the encapsulating process avoids the need to provide intimate contact between the high grade material and the cable insulation, as the sleeve can be designed so that the lower grade material operates under low electrical stress insufficient to cause damage to the material.

The use of a low grade resin also has the advantage of providing good thermal conductivity, allowing the hot conductors, in use, to dissipate their heat more readily to the exterior of the joint.

Preferably the edges of the insert are of rounded form as this assists in controlling the electrical stress in the sleeve to a low level when the joint is surrounded by an earth screen.

Encapsulation is conveniently carried out in the usual manner by supporting the joint within a jointing box, and introducing the fluid encapsulating material into the box so that it completely surrounds the joint and subsequently allowing the encapsulating material to harden, so that it completely surrounds the joint.

Similarly, a connector, which is preferably employed for forming the electrical connection between the cable conductors, can be of any suitable known form appropriate to the shape and dimensions of the conductors.

Preferably the sleeve is supported coaxially around the cable ends during the encapsulating process, by the introduction of one or more electrically conductive packing pieces between the connector and the interior of the insert. This will enable a single size sleeve to be used with cable insulations of varying diameters, and to accommodate non-circular cable cores as commonly used in medium voltage cables with no loss of electrical integrity. Other advantages will become apparent from the following description.

In US-A-3571783 there is described a cable joining device which produces, when used, a joint between insulated cables in which there is, surrounding the ends of the interconnected cables, a sleeve of solid electrically insulating material incorporating along part of its internal surface, intermediate its ends, an insert of a material which is substantially more electrically conductive than the sleeve, which is in electric contact with the interconnected conductors, and whose ends project over the cable insulation with a gap therebetween. However, the method of use of this cable joining device, and hence the resulting joint, differs from the method and joint of the present invention. The device of US-A-3571783 is in the form of a factory-made, sealed, hollow cylindrical casing containing the sleeve and an expandable female conductor housed in the sleeve and filled with dielectric material, which material is of liquid form to permit the ends of the cables to be joined to be inserted into the device via seals at opposite ends of the casing and pushed axially through the casing into the female connector.

A method of forming a joint between conductors of two medium voltage electrical power cables in accordnace with the invention, and the joint so formed, will now be described by way of example with reference to the accompanying schematic drawing which represents an axial cross-section through the formed joint.

In forming the joint an appropriate length of the insulation is stripped from the ends of the two cables 2, and an electrical connection is made between the exposed ends of the conductors 3 of the cables by means of a metal sleeve connector 4 fitted on to the conductors and clamped to them in known manner.

A relatively rigid housing 5 in the form of a sleeve formed of a high grade insulating polymer such as EPR rubber, co-moulded with an internal conducting polymer insert 6, and which has been previously threaded on to one of the cables 2, is positioned over the connector 4 with an annular gap 7 between each end of the housing and the insulation 1 of the respective cable 2. The insert, typically carbon-loaded nitryl rubber, is thus bonded, free of voids, to the inner surface of the sleeve. The insert 6 is shorter than the sleeve, and extends over part of the inner surface of the sleeve intermediate its ends.

The edges 8 at the two ends of the insert 6 are of rounded shape so as to control the electric stress to a low level, and the insert is positioned with the ends approximately in alignment with the ends of the cable insulation 1. The rounded ends 8 of the insert project radially inwardly, towards the cable insulation.

The housing 5 is disposed coaxially around the connector 4, the radial dimension of the gap between the outer surface of the connector 4 and the inner surface of the insert 6 conveniently being assured by the use of an auxiliary conducting packing piece 9, although in some cases the bore of the insert 6 may be sized to the diameter of the connector.

The housing 5 is provided externally, adjacent its ends, with annular projections 12 which are arranged to align with corresponding projections 12′ on the housing 5′ of an adjacent joint, when joining the phases of multi-core cables, in order to provide a controlled clearance between them and an earthed metallic safety screen, shown partly at 13, which is arranged to completely surround the joint.

A box 14, also shown only in part, and typically formed of polymer sheet, serves as a mould for a cold pouring resin filling compound which is poured into the space 15 surrounding the joint or joints through filling apertures in the top of the box, the filling compound passing through perforations 11 in the safety screen 13. The filling compound, which is a resin of low grade due to its heavy loading with a granulated mineral filler such as sand and ground calcite (chalk), is fluid at the time of pouring, and accordingly flows around the housing 5 and into the gaps 7 between the protruding ends of the housing 5 and the cable insulation 1, the resin subsequently hardening to form a rigidly encased joint.

As the resin is fluid on introduction into the box it is able to infiltrate into empty spaces within the housing 5, and it has been found that intimate contact between the housing and the cable insulation 1 is no longer necessary.

Such a method has the additional advantage that it simplifies the installation procedure, as the shape of the high grade insulation, which is provided by the housing 5, can be designed to provide a controlled degree of insulation, a single size insulation housing being suitable for a wide range of cable insulation diameters. Moreover the housing is capable of accommodating non-circular cable cores as commonly used in medium voltage cables with no loss of electrical integrity.

The form of joint is also extremely tolerant of localised depressions, flats, scores or other deficiencies in the cable which may be due to cable manufacturing imperfections or poor cable preparation during installation.

Moreover the insulating housing can be electrically tested at completion of manufacture and before installation, and as the housing is not significantly changed during installation the quality of the installed joint can be assured.

The electrical properties of the components of the joint will now be illustrated.

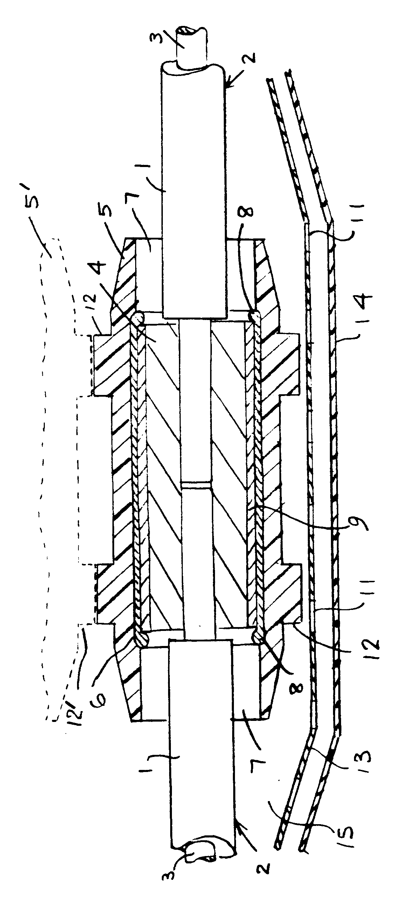

The electrical resistance of the insert is typically about 10³ ohm cm (or lower), and that of the sleeve and the resin is typically about 10¹² ohm cm. Thus the insert is substantially more conductive than the sleeve and the resin, but less conductive than the cable conductors. The electric permittivity of the resin is typically about twice that of the sleeve, which, with the geometries illustrated in the drawing, allows the resin to have an electric strength only one quarter of that of the sleeve. In this example, the electric strengths of the EPR rubber sleeve and the low voltage grade polyurethane resin heavily loaded with sand and chalk are respectively 40kV/mm and 10kV/mm.

The greatest electric stress occurs from the outer rounded edges 8 of the insert 6 through the sleeve towards the earth screen 13, and this is readily controllable by accurate profiling of the edges 8. Minimal stress occurs between the inwardly-projecting, rounded edges 8 and the cable conductors. These inward projections, at the electric potential of the conductors, effectively extend the beneficial effects of the insert into the ends of the cable insulation to render harmless any voids or imperfections in the interface in these regions between cable insulation and resin.

## Claims

1. A method of forming a joint between insulated conductors (2) of two power cables, comprising the steps of surrounding the ends of the interconnected conductors (3) with a sleeve (5) of solid, electrically-insulating material incorporating along part of its internal surface intermediate its ends an insert (6) of a material which is substantially more electrically conductive than the sleeve, so that the insert is in electrical contact with the interconnected conductors (3) and the ends of the sleeve project over the cable insulation (1) with an annular gap (7) therebetween, introducing to the joint in a fluid state a hardenable, electrically-insulating material which is substantially less electrically conductive when solid than the insert and which is sufficiently fluid to allow it to penetrate and fill the annular gap between the projecting ends of the sleeve and the cable insulation, and allowing the material to harden to encapsulate the joint.

2. A joint formed between insulated conductors (2) of two power cables, comprising : means (4) interconnecting the conductors (3); a sleeve (5) surrounding the interconnected conductors and having ends projecting over the cable insulation to define at each end an annular gap therebetween; an insert (6) incorporated along part of the internal surface of the sleeve intermediate its ends and in electrical contact with the interconnected conductors; a material encapsulating the joint and filling the said annular gaps; the sleeve and the encapsulating material being electrically insulating and substantially less electrically conductive than the insert; AND CHARACTERISED BY the encapsulating material being hardened and having been introduced into the joint in a fluid state.

3. A method according to Claim 1 or a joint according to Claim 2, in which the sleeve (5) has a substantially greater electric voltage grade than that of the hardened encapsulating material.

4. A method according to Claim 1 or 3, or a joint according to Claim 2 or 3, in which the insert is bonded to the inner surface of the sleeve.

5. A method according to Claim 1, 3 or 4, or a joint according to Claim 2, 3 or 4, in which the electric permittivity of the encapsulating material when solid is substantially greater than that of the sleeve.

6. A method according to Claim 1, 3, 4 or 5, or a joint according to Claim 2, 3, 4 or 5, in which the edges (8) of the ends of the insert are of rounded form so as to reduce electrical stress in the adjacent portion of the sleeve.

7. A method or a joint according to Claim 6, in which the rounded ends project radially inwardly towards the cable insulation.

8. A method or a joint according to any preceding claim, in which a metal earth screen (13) is provided around the joint.

9. A method or a joint according to any preceding claim, in which the encapsulating material is a cold-cured resin.

## Patentansprüche

1. Verfahren zum Herstellen einer Verbindung von isolierten Leitern (2) zweier Energiekabel, bestehend aus den Schritten: Umhüllen der Enden der miteinander verbundenen Leiter (3) mit einer Hülse (5) aus festem, elektrisch isolierendem Material, die entlang eines Teils ihrer Innenfläche zwischen ihren Enden einen Einsatz (6) aus einem Material mit einschließt, das stärker elektrisch leitend ist als die Hülse (5) in der Weise, daß der Einsatz in elektrischem Kontakt mit den miteinander verbundenen Leitern (3) ist und die Enden der Hülse über die Kabelisolation (1) hinaus vorstehen, mit einem ringförmigen Spalt (7) dazwischen; Einleiten in die Verbindung ein härtbares, elektrisch isolierendes Material in flüssigem Zustand, das geringer elektrisch leitend im festen Zustand als der Einsatz ist und das ausreichend flüssig ist, um in den ringförmigen Spalt zwischen den vorspringenden Enden der Hülse und der Kabelisolation einzudringen und diese zu füllen, und Zulassen des Aushärtens des Materials, um die Verbindung einzukapseln.

2. Verbindung von isolierten Leitern (2) zweier Energiekabel, mit einem Element (4), das die Leiter (3) miteinander verbindet, einer Hülse (5), die die miteinander verbundenen Leiter umgibt und Enden aufweist, die über die Kabelisolation vorstehen, um an jedem Ende einen ringförmigen Spalt dazwischen zu bilden, mit einem Einsatz (6), der entlang eines Teils der Innenfläche der Hülse zwischen ihren Enden miteingeschlossen ist und in elektrischem Kontakt mit den miteinander verbundenen Leitern steht, mit einem Material, das die Verbindung einkapselt und die ringförmigen Spalte füllt, wobei die Hülse und das einkapselnde Material elektrisch isolierend und geringer elektrisch leitend als der Einsatz sind und gekennzeichnet dadurch, daß das einkapselnde Material gehärtet ist und in die Verbindung eingeleitet wurde.

3. Verfahren nach Anspruch 1 oder eine Verbindung nach Anspruch 2,
**dadurch gekennzeichnet,**
daß die Hülse (5) einer höheren elektrischen Spannungsklasse als das gehärtete einkapselnde Material angehört.

4. Verfahren nach Anspruch 1 oder 3 oder eine Verbindung nach Anspruch 2 oder 3,
**dadurch gekennzeichnet,**
daß der Einsatz mit der Innenfläche der Hülse verbunden ist.

5. Verfahren nach Anspruch 1, 3 oder 4 oder eine Verbindung nach Anspruch 2, 3 oder 4,
**dadurch gekennzeichnet,**
daß die Dielektrizitätskonstante des einkapselnden Materials, wenn es fest ist, größer als diejenige der Hülse ist.

6. Verfahren nach Anspruch 1, 3, 4 oder 5 oder eine Verbindung nach Anspruch 2, 3, 4 oder 5,
**dadurch gekennzeichnet,**
daß die Kanten (8) der Enden des Einsatzes abgerundete Form aufweisen, um die elektrische Belastung in dem angrenzenden Teil der Hülse zu reduzieren.

7. Verfahren oder Verbindung nach Anspruch 6,
**dadurch gekennzeichnet,**
daß die abgerundeten Enden radial nach innen in Richtung der Kabelisolation vorstehen.

8. Verfahren oder Verbindung nach jedem voranstehenden Anspruch, **dadurch gekennzeichnet,**
daß eine metallische, auf Erdpotential liegende Abschirmung (13) die Verbindung umgibt.

9. Verfahren oder Verbindung nach jedem voranstehenden Anspruch, **dadurch gekennzeichnet,**
daß das einkapselnde Material ein kalthärtendes Harz ist.

## Revendications

1. Procédé de formation d'un raccord entre des conducteurs isolés (2) de deux câbles d'alimentation, comprenant les étapes suivantes : la disposition, autour des extrémités des conducteurs interconnectés (3), d'un manchon (5) d'une matière solide isolante de l'électricité comprenant, le long d'une partie de la surface interne entre ses extrémités, et d'un élément rapporté (6) d'une matière qui est nettement plus conductrice de l'électricité que le manchon, si bien que l'élément rapporté est en contact électrique avec les conducteurs interconnectés (3), et les extrémités du manchon dépassent sur l'isolant du câble (1) avec un espace annulaire (7) entre eux, l'introduction dans le raccord, à un état fluide, d'une matière isolante de l'électricité et qui peut durcir, ayant une conductivité électrique, à l'état solide, nettement inférieure à celle de l'élément rapporté et suffisamment fluide pour qu'elle puisse pénétrer dans l'espace annulaire formé entre les extrémités en saillie du manchon et l'isolant du câble et remplir cet espace, et le durcissement de la matière afin qu'elle assure l'encapsulation du raccord.

2. Raccord formé entre les conducteurs isolés (2) de deux câbles d'alimentation, comprenant un dispositif (4) interconnectant les conducteurs (3), un manchon (5) entourant les conducteurs interconnectés et ayant des extrémités qui dépassent sur l'isolant du câble pour délimiter à chaque extrémité un espace annulaire intermédiaire, un élément rapporté (6) incorpore le long d'une partie de la surface interne du manchon entre ses extrémités et en contact électrique avec les conducteurs interconnectés, une matière encapsulant le raccord et remplissant les espaces annulaires, le manchon et la matière d'encapsulation étant isolants de l'électricité et nettement moins conducteurs de l'électricité que l'élément rapporté, et caractérisé en ce que la matière d'encapsulation est durcie et a été introduite dans le raccord à l'état fluide.

3. Procédé selon la revendication 1 ou raccord selon la revendication 2, dans lequel le manchon (5) a une qualité de résistance et une tension électrique nettement supérieures à celles de la matière durcie d'encapsulation.

4. Procédé selon la revendication 1 ou 3, ou raccord selon la revendication 2 ou 3, dans lequel l'élément rapporté est collé à la surface interne du manchon.

5. Procédé selon la revendication 1, 3 ou 4, ou raccord selon la revendication 2, 3 ou 4, dans lequel la permittivité électrique de la matière d'encapsulation, lorsqu'elle est solide, est nettement supérieure à celle du manchon.

6. Procédé selon la revendication 1, 3, 4 ou 5, ou raccord selon la revendication 2, 3, 4 ou 5, dans lequel les bords (8) des extrémités de l'élément rapporté ont une forme arrondie afin que la contrainte électrique soit réduite dans la partie adjacente du manchon.

7. Procédé ou raccord selon la revendication 6, dans lequel les extrémités arrondies dépassent radialement vers l'intérieur vers l'isolant du câble.

8. Procédé ou raccord selon l'une quelconque des revendications précédentes, dans lequel un écran métallique (13) de masse est disposé autour du raccord.

9. Procédé ou raccord selon l'une quelconque des revendications précédentes, dans lequel la matière d'encapsulation est une résine durcie à froid.
